# FASCICULE DE BREVET EUROPEEN

(11) **EP 1 681 481 B1**
(45) Date de publication et mention de la délivrance du brevet: **20.02.2008**
(21) Numéro de dépôt: 06100277.0
(22) Date de dépôt: 12.01.2006
(51) Int. Cl.: F16C 35/067, F16D 21/06

(54) **Elément de transmission à palier de centrage et de reprise d'effort**
Übertragungselement mit Zentrierlager zur Bedämpfung von Schwingungen
Transmission element with bearing for centering and absorbing vibrations

(30) Priorité: 18.01.2005 FR 0550145
(43) Date de publication de la demande: 19.07.2006
(73) Titulaire: Valeo Embrayages, 80000 Amiens Cedex 1 (FR)
(72) Inventeur: Thomire, Sylvain, F-80000 Amiens (FR); Thery, Pascal, F-80000 Amiens (FR)

(56) Documents cités:
- FR-A- 2 837 887
- FR-A- 2 851 547
- GB-A- 581 879
- GB-A- 2 123 497
- US-A- 2 812 987

## Description

La présente invention concerne un élément de transmission équipé d'un palier de centrage et de reprise d'effort, en particulier un couvercle d'embrayage ou de double embrayage d'un moteur à combustion interne.

Il est connu d'utiliser un double embrayage permettant l'accouplement progressif d'un volant d'un moteur à combustion interne à deux arbres indépendants d'entrée d'une boîte de vitesses à double embrayage. Les rapports de vitesses successifs sont disposés en alternance sur un arbre et sur l'autre. Chaque embrayage transmet le mouvement à l'un des arbres, le passage d'un rapport au suivant se fait en fermant l'embrayage du rapport à engager et en ouvrant simultanément l'embrayage du rapport à quitter. Avec une commande progressive de ces embrayages, on réalise un transfert de couple d'un rapport à l'autre sans interruption du couple.

Un double embrayage de ce type est décrit dans le document FR-A-2851547. Les deux embrayages sont montés dans un même couvercle lié en rotation au volant moteur. Deux commandes indépendantes permettent de régler le serrage des disques des embrayages pour transmettre le mouvement à deux arbres d'entrée coaxiaux disposés suivant l'axe du moteur. Un palier monté entre le couvercle de l'embrayage et le carter de la transmission est fixé au centre d'une face du couvercle située près de la transmission.

Le document FR-A-2861147, publié le 22 Avril 2005 et deposé le 21 Octobre 2003, décrit un mode de montage d'un palier comportant un roulement à billes sur un couvercle d'un double embrayage. Une commande fixée au carter de la transmission transmet une charge axiale au couvercle maintenu axialement en position par le palier qui reçoit en réaction cette même charge axiale. Un jonc interposé entre le couvercle et des pattes radiales du palier solidarise ces deux pièces en direction axiale. La bague extérieure du palier est centrée sur une collerette cylindrique du couvercle, réalisée directement par emboutissage de la tôle du couvercle.

Cette réalisation par emboutissage est économique mais entraîne des défauts de forme, de variation sur le diamètre et de circularité en particulier. Ces défauts rendent difficile le montage du roulement, surtout dans le cas où le serrage du roulement est fait dans une zone située dans le plan du chemin de roulement des billes et où la bague extérieure du roulement est une bague mince. Les défauts peuvent se traduire par un jeu ou un serrage important du roulement, voir une déformation excessive de la cage extérieure du roulement, qui se transmet au chemin de roulement des billes et réduit la durée de vie du palier.

Les documents GB581879A, US-A-2812987 et GB-A-2123497 décrivent des paliers de guidage d'un arbre rotatif, montés de façon élastique entre l'arbre et un support fixe, ces paliers n'ayant pas de fonction de transmission d'effort axiaux.

La présente invention a notamment pour but d'éviter ces inconvénients et d'apporter une solution simple, de faible encombrement, efficace et économique au problème du montage d'un roulement dans un élément réalisé par emboutissage d'une tôle.

Elle a en particulier pour objet le montage d'un roulement dans le couvercle d'un double embrayage sans générer de contraintes excessives dans le roulement.

Elle propose à cet effet un couvercle d'embrayage en tôle métallique emboutie, comprenant une collerette cylindrique centrée sur l'axe de rotation et recevant un palier de centrage et de reprise d'effort axial, ce palier comportant des éléments roulants montés entre une bague intérieur comportant une partie propre à être fixée sur un carter d'une transmission et une bague extérieure montée dans la collerette cylindrique du couvercle, caractérisé en ce que ladite bague extérieure a un diamètre extérieur inférieur au diamètre intérieur de la collerette et s'appuie radialement sur des pattes découpées dans la collerette et ayant une élasticité radiale, cette bague extérieure comprenant également des pattes radiales s'étendant dans des fentes de la collerette, un jonc étant monté axialement entre les pattes radiales de la bague extérieure et une face radiale du couvercle portant à la collerette pour assurer le maintien axial du palier sur le couvercle.

Un avantage essentiel du couvercle selon l'invention est que les pattes à élasticité radiale réalisées dans la collerette forment un moyen discontinu de centrage qui peut s'adapter élastiquement à une pièce cylindrique complémentaire telle qu'une bague de palier, sans jeu ni contraintes excessives, et donc sans déformation ou contrainte importante de cette pièce.

Un autre avantage de l'invention est que ce centrage est réalisé de manière économique par découpe du couvercle, sans pièce additionnelle, et que le palier peut recevoir un roulement standard.

Dans un mode de réalisation préféré de l'invention, les pattes découpées dans la collerette sont légèrement en saillie à l'intérieur de cette collerette.

Selon un mode de réalisation, les pattes s'étendent le long de l'axe de rotation et ont une extrémité libre tournée vers la transmission.

Selon une variante de réalisation, les pattes s'étendent le long de l'axe de rotation et ont une extrémité libre tournée vers le moteur.

Selon une autre variante de réalisation, les pattes s'étendent circonférentiellement autour de l'axe de rotation.

Dans ces trois modes de réalisation, les pattes précitées sont sensiblement dans le même plan transversal que les éléments roulants du palier.

Les fentes de la collerette peuvent être décalées angulairement par rapport aux pattes de centrage du palier.

Selon une autre caractéristique de l'invention, la bague intérieure du roulement est constituée d'une tôle comportant une partie propre à être fixée sur un carter de transmission.

D'une manière générale, le couvercle selon l'invention peut constituer aussi le couvercle d'un double embrayage comportant une double commande fixée sur le carter de la transmission.

L'invention sera mieux comprise et d'autres caractéristiques et avantages de celle-ci apparaîtront plus clairement à la lecture de la description détaillée ci-après donnée à titre d'exemple et faite en référence aux dessins annexés dans lesquels :
- la figure 1 est une vue schématique en coupe axiale d'un double embrayage possédant une commande fixée au carter de la transmission ;
- la figure 2 est une demi-vue en coupe axiale et à plus grande échelle d'un premier mode de réalisation de l'invention ;
- la figure 3 est une demi-vue partielle de dessus de la collerette du couvercle ;
- la figure 4 est une demi-vue en coupe axiale d'un deuxième mode de réalisation de l'invention ;
- la figure 5 est une vue partielle de dessus de la collerette du couvercle de la figure 4 ;
- la figure 6 est une demi-vue en coupe axiale d'un troisième mode de réalisation de l'invention ;
- la figure 7 est une vue partielle de dessus de la collerette du couvercle de la figure 6.

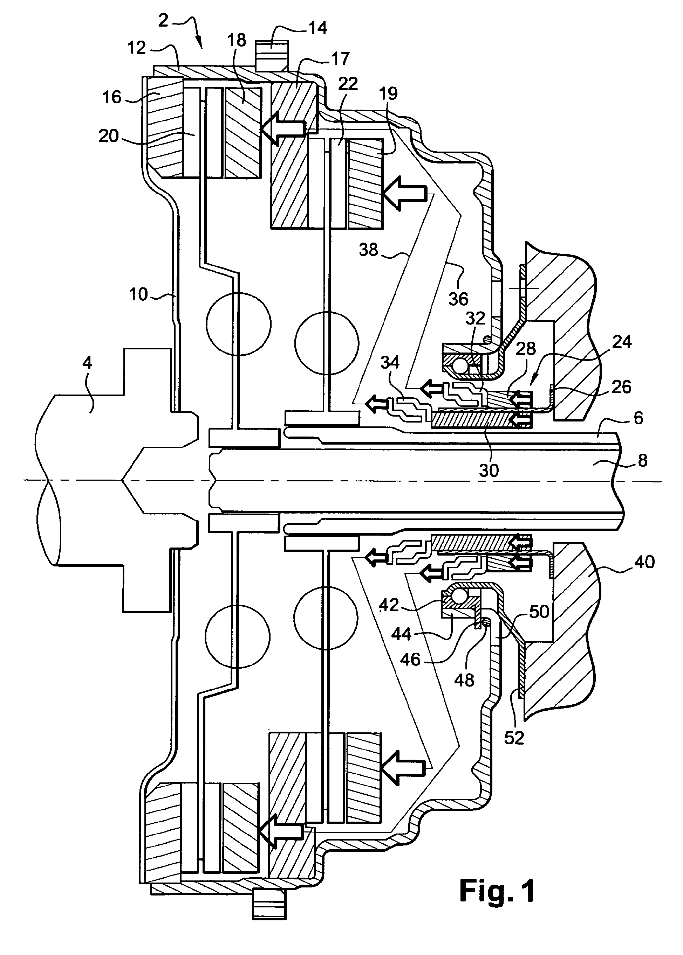

Le schéma de principe de la figure 1 représente un double embrayage 2 fixé sur l'extrémité d'un vilebrequin 4 et entraînant deux arbres coaxiaux 6, 8 formant l'entrée d'une transmission. Ce double embrayage 2 comprend une tôle annulaire mince 10 ayant une certaine flexibilité suivant l'axe de rotation, fixée par sa partie centrale sur l'extrémité du vilebrequin 4 au moyen de vis non représentées. La périphérie extérieure de cette tôle 10 est fixée à un plateau de réaction 16 lui-même solidaire d'un couvercle 12 formé par une tôle emboutie. Ce couvercle 12 supporte un deuxième plateau de réaction 17 et reçoit par ailleurs une couronne de démarreur 14.

Les plateaux de réaction 16, 17 coopèrent chacun avec un plateau de pression 18, 19 respectivement, solidaire en rotation du couvercle et pouvant se déplacer en translation sur une petite course axiale pour serrer des disques de friction 20, 22. Chaque disque de friction 20, 22 entraîne l'arbre intérieur 8 ou extérieur 6 respectivement par l'intermédiaire d'un moyeu comportant des cannelures axiales internes coopérant avec des cannelures externes de l'arbre d'entrée 6, 8 correspondant.

Ces embrayages sont actionnés par un dispositif de double commande 24 comportant deux vérins 28, 30 guidés par un tube guide 26 qui est fixé sur un carter 40 de la transmission et centré par rapport aux arbres 6, 8. Chaque vérin 28, 30 prend appui sur le carter 40 pour exercer une charge axiale sur un roulement 32, 34 qui lui-même agit par l'intermédiaire d'un moyeu formant levier 36, 38 ayant un point d'appui sur le couvercle 12, sur le plateau de pression 18,19 correspondant. Le dispositif de double commande 24 en prenant appui sur le carter 40 peut appliquer une charge plus grande sur les disques d'embrayage 20. Sur la figure 1, les charges axiales sont représentées schématiquement par des flèches en trait noir épais.

Ces charges axiales agissent sur les plateaux de réaction 16, 17 fixés au couvercle 12 qui est positionné axialement et centré sur le carter de transmission 40 par un palier comprenant un roulement 42. Ce roulement 42 comprend une bague extérieure ajustée dans une collerette cylindrique de révolution 44 qui est formée dans le couvercle 12 et centrée sur l'axe de rotation. La bague intérieure du palier est constituée d'une tôle comprenant une partie radiale plane 52 en appui sur une face du carter de transmission 40 et fixée à celui-ci par des vis non représentées. Le roulement 42 réalise ainsi le centrage et le positionnement axial de la face du couvercle 12 tournée vers la transmission. De plus, il transmet au carter 40 la force axiale appliquée sur le couvercle 12.

Des fentes 50 sont réalisées dans la collerette 44 sur une partie de sa longueur axiale et se continuent sur la face radiale du couvercle 12 supportant cette collerette 44. La bague extérieure du roulement 42 comporte des pattes radiales 46 qui s'étendent radialement dans les fentes 50, au-delà de la surface externe de la collerette 44. Chaque patte radiale 46 correspond à une fente 50 qui permet la mise en place du roulement 42 dans la collerette 44 par introduction depuis la transmission. Les fentes 50 sont réalisées par une découpe de la tôle accomplie en parallèle avec les opérations d'emboutissage.

La charge axiale est transmise du couvercle 12 au roulement 42 par un jonc 48 placé entre les pattes radiales 46 et la face radiale du couvercle supportant la collerette 44, qui empêche le roulement de ressortir de la collerette du côté de la transmission. Ce jonc enserre l'extérieur de la collerette et est ouvert ce qui permet de le monter après la mise en place du roulement en l'écartant pour passer au dessus des pattes radiales 46.

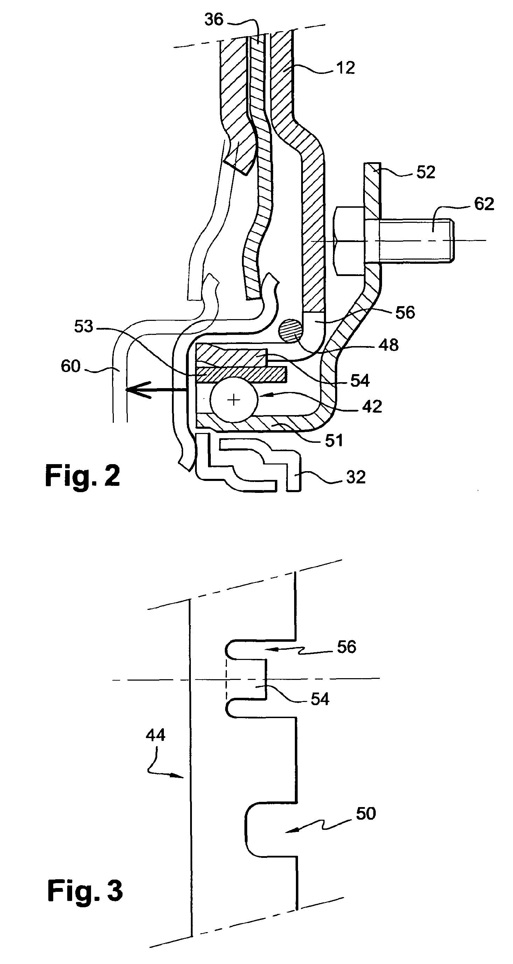

Les figures 2 et 3 représentent un premier mode de réalisation du palier selon l'invention. Le couvercle 12 comprend la collerette 44 qui supporte le roulement à billes 42 et dont une partie est représentée en figure 3 en étant mise à plat pour faciliter la présentation.

La butée 32 de commande d'un embrayage est située radialement à l'intérieur du palier et agit par l'intermédiaire d'une pièce annulaire 60 sur le moyen de levier 36. Ces deux pièces 36, 60 sont représentées dans les deux positions extrêmes de leur course axiale de commande symbolisée par une flèche.

Le roulement à billes 42 du palier comprend une bague intérieure 51 en tôle comportant la collerette radiale 52 fixée par des vis 62 au carter de transmission, des billes et une bague extérieure 53 en tôle. La réalisation des bagues en tôle permet d'associer ces bagues économiquement à des formes additionnelles comme les pattes radiales 46 ou la collerette 52, obtenues simplement par découpe et emboutissage. Par contre, le centrage et le serrage de la bague extérieure 53 en tôle dans la collerette 44 du couvercle 12 sont plus difficiles à réaliser car les efforts doivent être bien contrôlés pour ne pas déformer cette bague mince.

Pour assurer ce centrage et ce serrage en contrôlant l'effort, on utilise au moins trois pattes 54 souples découpées dans la collerette 44 et qui font légèrement saillie à l'intérieur de celle-ci. La collerette 44 à son extrémité tournée vers le moteur est circulaire continue pour garder une rigidité. Puis entre cette extrémité continue et la face radiale du couvercle 12, des évidements 56 angulairement espacés sont découpés pour former des pattes 54 parallèles à l'axe de rotation et qui ont une extrémité libre du côté de la transmission.

Les pattes 54 sont en appui sur la bague extérieure 53 du roulement 42, leur saillie radiale vers l'intérieur de la collerette 44 peut être de quelques dixièmes de millimètre de manière à ce que la bague du roulement 42 ne vienne pas en contact avec l'extrémité circulaire continue de la collerette 44 qui est très rigide. Les évidements 56 formés de chaque côté de la patte 54 confère à celle-ci une certaine souplesse radiale calculée pour assurer un serrage de la bague extérieure du roulement 42 compris dans une fourchette qui tient compte des tolérances de fabrication des différents composants, pour garantir une valeur de serrage acceptable.

Une encoche 50 visible sur la figure 3 est formée dans la collerette 44 pour le logement d'une patte radiale 46 de la bague extérieure du roulement 42. Ces encoches 50 sont circonférentiellement éloignées des évidements 56 pour ne pas affaiblir la collerette 44. Comme représenté en figure 1, un jonc 48 est monté entre les pattes 46 de la bague extérieure 53 du roulement 42 et la face radiale du couvercle 12.

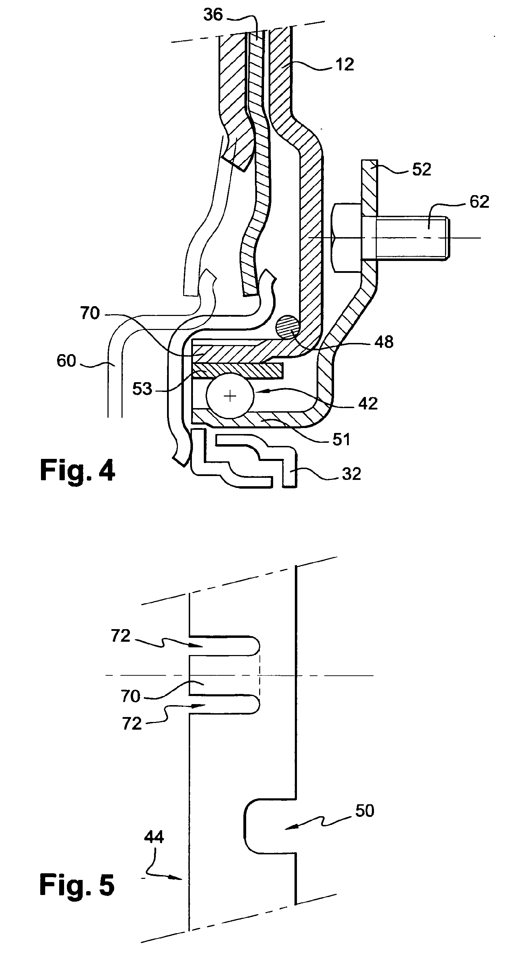

Les figures 4 et 5 représentent un deuxième mode de réalisation du palier selon l'invention. Comme dans la réalisation précédente, des pattes souples 70 formées par découpe de la collerette 44 sont légèrement en saillie vers l'intérieur de cette collerette pour centrer et serrer d'une manière contrôlée la bague extérieure 53 du roulement 42.

Chaque patte 70 s'étend parallèlement à l'axe de rotation en direction de l'embrayage depuis une extrémité circulaire continue de la collerette, située du côté de la transmission, et est encadrée par deux fentes 72. Sa longueur est calculée pour obtenir la raideur nécessaire.

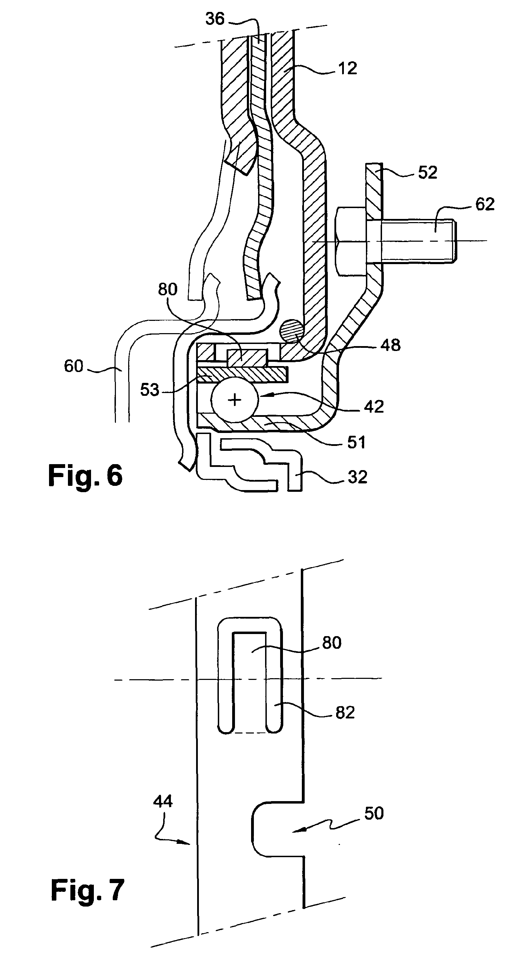

Les figures 6 et 7 représentent un troisième mode de réalisation du palier suivant l'invention. Comme dans les réalisations précédentes, des pattes souples 80 sont réalisées par découpe de la collerette 44 et font légèrement radialement vers l'intérieur de cette collerette pour centrer et serrer d'une manière contrôlée la bague extérieure 53 du roulement 42.

Les deux extrémités axiales de la collerette sont circulaires continues de part et d'autre d'une partie centrale où sont découpées des fentes 82 qui délimitent des pattes 80 orientées circonférentiellement. Chaque fente 82 est en forme de U.

D'une manière générale, le palier centré et serré dans l'élément de transmission selon l'invention peut comporter un roulement réalisé suivant diverses technologies, par exemple avec des bagues massives usinées ou des rouleaux à la place des billes.

La collerette 44 peut avoir différentes formes. Elle peut par exemple comporter seulement des fractions angulaires d'un cylindre, tout en gardant des pattes ou des zones souples qui permettent le centrage du palier. Ces pattes peuvent avoir d'autres orientations que celles représentées.

L'élément de transmission peut faire partie d'un ensemble quelconque utilisé dans une transmission d'un véhicule, par exemple un embrayage simple ou double, un embrayage à sec ou dans l'huile, ou un double volant amortisseur.

## Revendications

1. - Couvercle d'embrayage en tôle métallique emboutie, comprenant une collerette cylindrique (44) centrée sur l'axe de rotation et recevant un palier (42) de centrage et de reprise d'effort axial, ce palier comportant des éléments roulants montés entre une bague intérieure (51) comportant une partie (52) propre à être fixée sur un carter d'une transmission et une bague extérieure (53) montée dans la collerette cylindrique (44) du couvercle, **caractérisé en ce que** ladite bague extérieure (53) a un diamètre extérieur inférieur au diamètre intérieur de la collerette (44) et s'appuie radialement sur des pattes (54, 70, 80) découpées dans la collerette et ayant une élasticité radiale, cette bague extérieure (53) comprenant également des pattes radiales (46) s'étendant dans des fentes de la collerette (50), un jonc (48) étant monté axialement entre les pattes radiales (46) de la bague extérieure et une face radiale du couvercle (12) portant à la collerette (44) pour assurer le maintien axial du palier (42) sur le couvercle.

2. - Couvercle d'embrayage selon la revendication 1, **caractérisé en ce que** les pattes (54, 70, 80) découpées dans la collerette (44) sont légèrement saillie à l'intérieur de la collerette (44).

3. - Couvercle d'embrayage selon la revendication 2, **caractérisé en ce que** les pattes (54) s'étendent le long de l'axe de rotation et ont une extrémité libre tournée vers la transmission.

4. - Couvercle d'embrayage selon la revendication 2, **caractérisé en ce que** les pattes (70) s'étendent le long de l'axe de rotation et ont une extrémité libre tournée vers le moteur.

5. -Couvercle d'embrayage selon la revendication 2, **caractérisé en ce que** les pattes (80) s'étendent circonférentiellement autour de l'axe de rotation.

6. - Couvercle d'embrayage selon l'une des revendications précédentes, **caractérisé en ce que** les pattes (54, 70, 80) sont sensiblement dans le même plan transversal que les éléments roulants du palier.

7. - Couvercle d'embrayage selon la revendication 6, **caractérisé en ce que** la bague extérieure (53) du palier (42) est constitué d'une tôle.

8. - Couvercle d'embrayage selon l'une des revendications 1 à 7, **caractérisé en ce que** les fentes (50) de la collerette sont décalées angulairement par rapport aux pattes (54, 70, 80) de centrage du palier.

9. - Couvercle d'embrayage selon l'une des revendications 1 à 8, **caractérisé en ce que** la bague intérieure (51) du palier (42) est constituée d'une tôle.

10. - Couvercle d'embrayage selon l'une des revendications 1 à 9, **caractérisé en ce que** l'embrayage est un embrayage double comportant une double commande fixée sur le carter de la transmission.

## Claims

1. Clutch cover made of stamped metal plate, comprising a cylindrical flange (44) which is centred on the axis of rotation, and receives a bearing (42) for centring and recovery of axial force, this bearing comprising rolling elements which are fitted between an inner ring (51) comprising a part (52) which can be secured to a transmission case, and an outer ring (53) which is fitted in the cylindrical flange (44) of the cover, **characterised in that** the said outer ring (53) has an outer diameter which is smaller than the inner diameter of the flange (44), and is supported radially on lugs (54, 70, 80) which are cut out in the flange, and have radial resilience, this outer ring (53) also comprising radial lugs (46) which extend in slots in the flange (50), a retaining ring (48) being fitted axially between the radial lugs (46) of the outer ring and a radial surface of the cover (12) which bears the flange (44), in order to assure axial retention of the bearing (42) on the cover.

2. Clutch cover according to claim 1, **characterised in that** the lugs (54, 70, 80) which are cut out in the collar (44) project slightly inside the flange (44).

3. Clutch cover according to claim 2, **characterised in that** the lugs (54) extend along the axis of rotation, and have a free end which faces towards the transmission.

4. Clutch cover according to claim 2, **characterised in that** the lugs (70) extend along the axis of rotation, and have a free end which faces towards the engine.

5. Clutch cover according to claim 2, **characterised in that** the lugs (80) extend circumferentially around the axis of rotation.

6. Clutch cover according to one of the preceding claims, **characterised in that** the lugs (54, 70, 80) are substantially on the same transverse plane as the rolling elements of the bearing.

7. Clutch cover according to claim 6, **characterised in that** the outer ring (53) of the bearing (42) consists of a metal plate.

8. Clutch cover according to one of claims 1 to 7, **characterised in that** the slots (50) in the flange are offset angularly relative to the centring lugs (54, 70, 80) of the bearing.

9. Clutch cover according to one of claims 1 to 8, **characterised in that** the inner ring (51) of the bearing (42) consists of a metal plate.

10. Clutch cover according to one of claims 1 to 9, **characterised in that** the clutch is a double clutch comprising a double control secured to the transmission case.

## Patentansprüche

1. Kupplungsdeckel aus tiefgezogenem Metall-Blech, umfassend einen zylindrische Kragen (44), der auf die Rotationsachse zentriert ist und ein Lager (42) zur Zentrierung und zur Aufnahme einer Axialkraft aufnimmt, wobei das Lager Rollelemente aufweist, die zwischen einem Innenring (51) mit einem zur Befestigung an einem Getriebegehäuse geeigneten Teil (52) und einem in dem zylindrische Kragen (44) des Deckels montierten Außenring (53) montiert sind, **dadurch gekennzeichnet, dass** der Außenring (53) einen Außendurchmesser hat, der kleiner ist als der Innendurchmesser des Kragens (44), und sich radial auf Laschen (54, 70, 80) abstützt, die aus dem Kragen ausgeschnitten sind und eine radiale Elastizität haben, wobei der Außenring (53) außerdem radiale Laschen (46) umfasst, die sich in Schlitze (50) des Kragens erstrecken, und wobei ein Ring (48) axial zwischen den radialen Laschen (46) des Außenrings und einer den Kragen (44) tragenden radialen Fläche des Deckels (12) montiert ist, um den axialen Halt des Lagers (42) an dem Deckel zu sichern.

2. Kupplungsdeckel nach Anspruch 1, **dadurch gekennzeichnet, dass** die aus dem Kragen (44) ausgeschnittenen Laschen (54, 70, 80) leicht am Inneren des Kragens (44) vorspringen.

3. Kupplungsdeckel nach Anspruch 2, **dadurch gekennzeichnet, dass** sich die Laschen (54) entlang der Rotationsachse erstrecken und ein zum Getriebe weisendes freies Ende haben.

4. Kupplungsdeckel nach Anspruch 2, **dadurch gekennzeichnet, dass** sich die Laschen (70) entlang der Rotationsachse erstrecken und ein zum Motor weisendes freies Ende haben.

5. Kupplungsdeckel nach Anspruch 2, **dadurch gekennzeichnet, dass** sich die Laschen (80) in Umfangsrichtung um die Rotationsachse herum erstrecken.

6. Kupplungsdeckel nach Anspruch 1, **dadurch gekennzeichnet, dass** sich die Laschen (54, 70, 80) etwa in der selben Querebene wie die Rollelemente des Lagers befinden.

7. Kupplungsdeckel nach Anspruch 6, **dadurch gekennzeichnet, dass** der Außenring (53) des Lagers (42) aus einem Blech besteht.

8. Kupplungsdeckel nach einem der Ansprüche 1 bis 7, **dadurch gekennzeichnet, dass** die Schlitze (50) des Kragens relativ zu den Laschen (54, 70, 80) zur Zentrierung des Lagers (42) winklig versetzt sind.

9. Kupplungsdeckel nach einem der Ansprüche 1 bis 8, **dadurch gekennzeichnet, dass** der Innenring (51) des Lagers (42) aus einem Blech besteht.

10. Kupplungsdeckel nach einem der Ansprüche 1 bis 9, **dadurch gekennzeichnet, dass** die Kupplung eine Doppelkupplung mit einer an dem Getriebegehäuse befestigten Doppelbetätigung ist.
